# EUROPEAN PATENT APPLICATION

(11) **EP 2 341 360 A1**
(43) Date of publication of application: **06.07.2011**
(21) Application number: 10016044.9
(22) Date of filing: 23.12.2010
(51) Int. Cl.: G01S 5/02, H04L 29/08

(54) **Automated locating of a mobile station without an alert at the mobile station**

(30) Priority: 29.12.2009 US 648930
(71) Applicant: Cellco Partnership D/B/A Verizon Wireless, Basking Ridge, NJ 07920-1097 (US)
(72) Inventor: Sanjeev, Kumar, San Ramon CA 94582 (US)
(74) Representative: Müller-Boré & Partner Patentanwälte

(57) **Abstract**

A mobile station (131) is configured to respond to a mobile messaging service message bearing a predetermined code (S1) to determine its location (S3) and send location information back to the requestor in a response message (S4). Typically, the mobile station (131) received such a message (S1) from another mobile station (132). However, the mobile station (131) does not display the received message or generate any alert regarding the received message (S2), which might otherwise inform someone with or near that mobile station of the location related messaging. For example, if a mobile station (131) is lost or stolen, the user can borrow another person's mobile device and send out a message with the code to the missing mobile station phone (S1), to obtain information as to the location of the user's missing mobile station (S4).

## Description

### Technical Field

The present subject matter relates to use of a mobile station message, with a predetermined code to request and obtain information as to the location of a mobile station, without generating an alert at the mobile station, for example, to allow a normal user to obtain the location of a lost or stolen mobile station without alerting a person in possession of the mobile station.

### Background

In recent years, mobile stations have become "must have" devices for most people, in many countries. The communications that such devices offer, via wireless mobile communications network, enable users to talk and exchange various types of messages for business and personal reasons and to access information, all from or while traveling through any location where a network provides service. As the technology has advanced, the size of mobile stations has decreased, so that today most can be carried in a pocket or purse, clipped to a belt, etc. There are situations where it is desirable to determine the location of a mobile station, and various industry players have developed technologies to meet such demands. For example, in the US today, most mobile devices are equipped with Global Positioning Satellite (GPS) receivers/processors sufficient to enable emergency services to obtain information as to the location of a device as part of the processing of an emergency call, e.g., to 911. The advanced location capabilities of such mobile stations, however, have also enabled service providers to offer services and applications today that will allow a user of a mobile station to learn their present location and possibly obtain information about that locale and/or related navigation information, via the mobile station itself.

Situations arise where it is desirable for another person to learn the location of a mobile station, and the service providers have developed technologies for many such situations. For example, mobile network service providers today offer at least some types of Mobile Location-Based Service (MLBS) that enable a user of or associated with one mobile station to locate a user of another mobile station, based on the location of the second mobile station. Examples of such services today include Chaperone offered by Verizon Wireless®, Axcess Family Finder offered by Alltel Wireless®, and Boost Loop offered by BoostMobile™.

Chaperon is a simple and secure method for parents to keep a closer tab on their children. The mobile stations are GPS enabled. Chaperon allows a customer (e.g., a parent) to view on a map a location of the Chaperone enabled phone of another customer (e.g., a child) and to receive alerts when the Chaperone enabled phone enters or leaves a particular zone. Similar to Chaperone technology, Axcess Family Finder allows a parent to determine the location of an Axcess Family Finder-capable phone associated with a child. To illustrate, using a personal computer or a mobile phone, the parent may access an Axcess Family Finder website to view on a map specific areas that its child has frequently visited (e.g., movie theaters and parks) and to perform on-demand search to locate an Axcess Family Finder-capable phone of the child.

Boost Loop expanded this type of location service to include keeping tabs on a wider range of friends and family member. In this connection, Boost Loop is another location-based social service that uses a mobile phone with built-in GPS to automatically update a customer location for a private list of friends. To illustrate, the customer downloads the Boost Loop software onto her mobile phone and publishes its location on a Boost Loop map. Thereafter, the customer may invite other friends who have installed Boost Loop to join the customer's networks. If friends accept such invitation, their locations will also be published on the map. As such, the customer can identify the locations of her friends in real-time on a map display on the customer's mobile station.

Although these mobile station location technologies allow a requesting device to monitor or learn the current location of a mobile station that is the "target" of a location information request or procedure, the existing technologies typically require the user seeking the location information to access a website or server, which entails an expensive data communication session, particularly if the information is requested from a mobile station. The server typically performs authentication/authorization functions, to insure that the party requesting the information is entitled to receive the information as to the location of the other party's station. Also, these services typically require installation of a relatively complex client application on a mobile station of the person seeking to obtain the location information and possibly on the target mobile station.

Also, the location services outlined above typically require the participants to subscribe and pay a monthly service charge, regardless of the level of actual usage. There are situations where the need to locate a mobile station occurs relatively infrequently. For example, due to the small size and the mobility of users of modern mobile stations, there are times when a user simply can not find his or her mobile station. Within a premises, the user may be able to have someone call the mobile station and listen for the ringtone. However, when the device is lost at an unknown location or is stolen, this common approach is not enough. However, the rare occasions of the device being lost or stolen would likely not justify the expense of the data sessions and subscription rates for the location services discussed above.

Also, it would be useful in many cases for people in the vicinity of the mobile station to not be aware of efforts to locate the device. For example, a mother may not want her teenage son to know that she is checking where he is. As another example, if a mobile station may have been stolen, the user (or authorities) may want to know the location without altering the thief who may turn-off or dispose of the device if alerted.

Hence, there is still a need for an improved/simplified technique for obtaining information as to the location of a mobile station.

### Summary

The teachings herein provide improved methods and equipment (e.g., mobile station and/or programming for the station) to provide a quick effective way to provide a person with information as to the location of a mobile station upon request using mobile messaging service type communications, for example, by direct messaging communication between the mobile station and another mobile station. The teachings, however, avoid drawing attention of anyone having or in the vicinity of the target mobile station, which such messaging might often generate. In the examples, the target mobile station responds to the initial request message by providing the location information without any alert or notification at that mobile station.

For example, the detailed description and drawings disclose a method of providing information as to location of a mobile station, which involves receiving a mobile messaging service message from a requestor, over the air from a wireless mobile communication network, at the mobile station. A number of further steps are performed upon detecting a predetermined code contained in the received message, without displaying the received message at the mobile station and without generating any alert regarding the received message at the mobile station. These further steps include determining the location of the mobile station, producing the information as to location of the mobile station, based on the determined location, and sending a mobile messaging service message from the mobile station over the air and through the wireless mobile communication network, for the requestor. The sent message contains the information as to location of the mobile station.

By way of a simple example that illustrates an advantage of this methodology, consider a situation where a mobile station user needs to find the location of their mobile station once it has been lost or stolen. The user can simply borrow a friend's or a family member's mobile device and send out a message with the code to his missing station. Without a local alert (sound or display), which might alter a thief if the station is stolen, the mobile station returns information as to its location, back to sender. The user merely walks/drives to indicated location and calls her or his mobile station number to see where the device is ringing. This is very clean way to find stolen or lost device.

Of course, those skilled in the art will recognize that the techniques discussed herein for locating a mobile station may be used in other scenarios where an authorized person wants to learn the location of a mobile station, such as when a parent wants to learn the location of a child. As yet another example, an employer may want to check the location of an employee, from time to time, via the employee's mobile station.

Any of the approaches to providing location information, as outlined herein, may be embodied in the form of a mobile station configured to provide the location information and/or in the form of a product or article of manufacture typically including a medium bearing a program that may configure a mobile station so that the station is capable of providing the location information as discussed herein.

Additional advantages and novel features will be set forth in part in the description which follows, and in part will become apparent to those skilled in the art upon examination of the following and the accompanying drawings or may be learned by production or operation of the examples. The advantages of the present teachings may be realized and attained by practice or use of various aspects of the methodologies, instrumentalities and combinations set forth in the detailed examples discussed below.

### Brief Description of the Drawings

The drawing figures depict one or more implementations in accord with the present teachings, by way of example only, not by way of limitation. In the figures, like reference numerals refer to the same or similar elements.

FIG. 1 includes a high-level functional block diagram example of a wireless mobile communication network overlaid with steps of a simplified process flow for communications between two mobile stations to automatically locate one of the mobile stations without an alert at that mobile station.

FIG. 2 is a high-level block diagram of an exemplary mobile station device as may be used as either of the stations in FIG. 1.

### Detailed Description

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and/or circuitry have been described at a relatively high-level, without detail, in order to avoid unnecessarily obscuring aspects of the present teachings.

The various techniques disclosed herein relate to technology enabling a mobile station to determine its location and send location information back to a requestor in response to a mobile messaging service message bearing a predetermined code. In several examples, the mobile messaging service message is from another mobile station. The mobile station receiving the message determines its location and sends the information back in another mobile messaging service message, but without any display of the received request message and without generating any localized alert.

The techniques outlined herein may be implemented to offer one or more advantages. For example, the mobile messaging service communications, typically directly between mobile stations, minimize or eliminate costly data session communications with a central server. At least the station used by the person requesting the information need only have standard messaging service capability, to send the request message and receive the response message. Security is implemented in the target mobile station, without the need for authentication/authorization of the requestor via a server. Hence, the party seeking the information need not go through a registration or log-in procedure with a server, and the device that person uses needs no specialized programming. Also, this approach may reduce the need for costly monthly subscriptions to a locator or finder type service. Furthermore, most modem mobile stations already include messaging programming and at least some location related programming (for location functions for 911 and the like), and the location techniques discussed here may require relatively little modification to such existing programming in the target station (e.g., often without the need for an extra client program for a finder service or the like).

To fully appreciate how this type of technique might work, it may be helpful to discuss a network and mobile stations in which the location information may be provided. Reference now is made in detail to the examples illustrated in the accompanying drawings and discussed below.

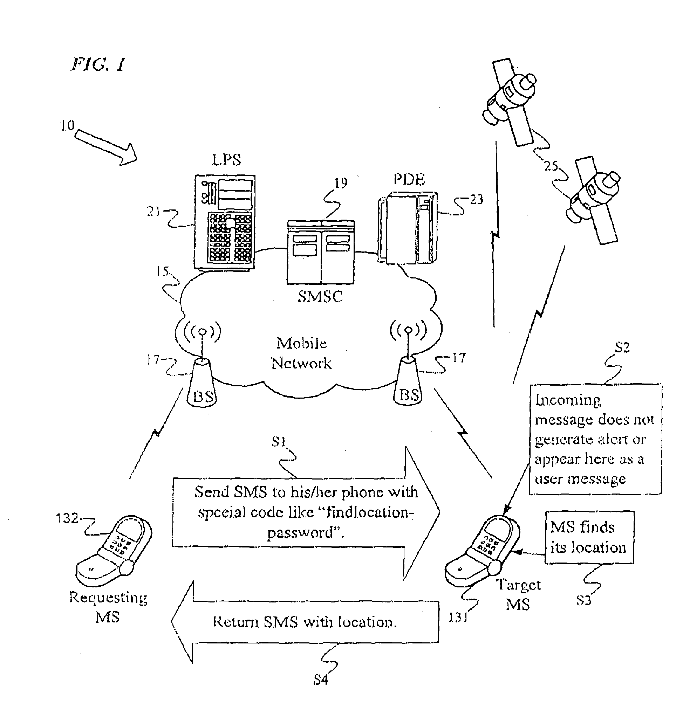

FIG. 1 illustrates a system 10 supporting offering a variety of mobile communication services, including the location function of interest here, to users of any number of mobile stations. The example shows simply two mobile stations (MSs) 131 and 132 as well as a mobile communication network 15. The network 15 provides mobile wireless communications services to those stations as well as to other mobile stations (not shown), for example, via a number of base stations (BSs) 17. The present techniques may be implemented in any of a variety of available mobile networks 15 and/or on any type of mobile station compatible with such a network 15, and the drawing shows only a very simplified example of a few relevant elements of the network for purposes of discussion here.

The network 15 allows users of the mobile stations such as 131 and 132 to initiate and receive telephone calls to each other as well as through the public switched telephone network or "PSTN" (not shown) and telephone stations connected to the PSTN. The network 15 typically offers a variety of other data services via the Internet, such as downloads, web browsing, email, etc.

The network allows Short Message Service (SMS) type text messaging between mobile stations and similar messaging with other devices via the Internet. Today, the network may offer one or more advanced mobile messaging services, such as enhanced messaging service (EMS) and/or multimedia messaging service (MMS). EMS is an application-level extension to SMS for cellular phones available on GSM, TDMA and CDMA networks. MMS is a mobile messaging type service that supports communications of messages carrying multimedia content, such as audio, picture and video content. Although EMS, MMS or another mobile messaging service may be used in the location operations discussed herein, the example utilizes SMS for the exchange of messages between the mobile stations 131 and 132 to provide requested device location information. Depending on the precise implementation and available network services, the target device 131 may also obtain some of the information regarding location via a data communication, for example, for assistance in determining location and/or for a translation of latitude and longitude information into a street address or the like.

Wireless carriers developed SMS to transmit text messages for display on the mobile stations. In many existing network architectures, the SMS traffic uses the signaling portion of the network to carry message traffic between a Short Message Service Center (SMSC) 19 and the mobile stations. The SMSC supports mobile station to mobile station delivery of text messages. The SMSC also supports communication of messages between the mobile stations and devices coupled to other networks. Here, the SMS capability of the network is used for message communications involved in the mobile station location operation.

Although a variety of other numbers or identifiers may be assigned to a mobile station for various network purposes, a Mobile Directory Number (MDN) or Mobile Telephone Number (MTN) is the telephone number assigned to a mobile station that a calling party or device inputs in order to call or send a message to the particular mobile station. To call the mobile station 131, for example, a user of a PSTN telephone or of another mobile station dials the MDN associated with the mobile station. To send a MMS message or a SMS message to destination mobile station 131, as another example, typically entails input of the MDN of that mobile station.

In the location communication, the user would operate mobile station 132 to address a SMS message requesting location information to the target mobile station 131, using the MDN of the mobile station 131 as the destination address. That request message would typically include the MDN of the requesting station 132 as an origination address. The response message, containing the information as to the location of the mobile station 131, would include the MDN of the mobile station 132, but not as the destination address (obtained from location information request message); and that message would include the MDN of the mobile station 131 as the origination address.

The mobile station 131 is configured to normally process most SMS messages as regular text messages, to generate an audible and/or alert as a notification of each received SMS message and to allow display of text contained in any received message in response to actuation of that station by a user indicating the user's desire to read the message. However, for purposes of the location functions under discussion here, the mobile station 131 is configured to recognize a predetermined code contained in a received SMS message and to perform the locations functions upon recognition of the code, without display or other form of alert.

By way of example, the predetermined code may take the form of a combination of a location function activation code and a user password. The activation code would cause a processor of a receiving mobile station 131 to initiate execution of relevant software, which initially would involve checking the received user password against a stored password. The activation code may be the same for all mobile stations, particularly those of a specific manufacturer or network service provider. The user password, however, may be relatively unique to each user/station. It is envisioned that the mobile station might come pre-provisioned with an initial password, but the user interface of the device would allow the user to change the password to a personal password. If the password in a received message containing the access code is validated by the mobile station 131 (matches the stored password), then the location and messaging software triggered upon receipt of the predetermined code (activation code and password in the example) cause the mobile station to perform the location related functions.

The location techniques under consideration here can utilize a variety of different techniques for the target mobile station 131 to determine its location and generate or obtain the corresponding location information for transmission in the response message. Exemplary techniques include standalone global positioning satellite (GPS) location determination, assisted GPS (aGPS) location determination, and triangulation using a signal from any one or more receivable base stations. The easiest approach to explain and implement might be for the mobile station 131 to have full on-board GPS and GSI (Geographic Information System) capabilities, to measure satellite signals, determine position and translate position into textual information such as an address. However, full GPS and/or GSI capabilities require substantial on-board processing and data storage within the mobile station. Because the mobile station often is configured for a variety of other functions, there is insufficient processing and storage capability. Hence, in the example of FIG. 1, we will assume that the system 10 implements aGPS type device location services, and the mobile station 131 uses those services to determine position and obtain the desired location information for the response.

The mobile telecom industry has been developing a number of technologies to locate mobile stations, both for emergency services (e.g., 911) and for location based applications. In an increasingly common network implementation, the mobile station has the capability to take GPS signal measurements and communicate those measurements to one or more network elements for processing, depending on the particular application. Typically, a position determining entity (PDE) communicates with an appropriately equipped mobile station (MS) to determine the location of the MS, and for non-emergency services, a Location Proxy Server (LPS) makes that information accessible to various user applications, including some applications that reside on mobile stations. Hence, the location determination software in the mobile station 131 enables that station to obtain the location information by working with elements of a location based service (LBS) platform of the mobile wireless communication network, such as a location proxy server (LPS) 21 and a PDE 23.

For determining mobile station locations, the network 15 includes one or more of the PDEs 23. The PDE 23 is a network element that manages the position or geographic location determination of each mobile station. For discussion purposes at this point, we will assume that exemplary network 15 utilizes an assisted GPS (aGPS) approach to the determination of mobile station location, in which the mobile station 131 takes measurements of signals from a number of GPS satellites 25 (only two of which are shown, for convenience) and interacts with the PDE 23 to process those measurements so as to determine the latitude and longitude (and possibly altitude) of the current location of the mobile station 13.

The PDE system 23 is essentially a general purpose programmable device with an interface for data communication via the network 15 running server software and running programming for implementation of the PDE functions. The PDE 23 stores (e.g., in cache memory) or has access to a complete and up to date set of the satellite data for the constellation of GPS satellites 25 needed to allow computation of position based on pseudorange measurements from satellite signals. The data may include that associated with the entire constellation but will at least include the data for the satellites expected to be broadcasting into the geographic region serviced by the network 15.

When a mobile station such as 131 attempts a GPS position fix, the mobile station provides information allowing the PDE 23 to perform a pre-fix. Typically, the mobile station will provide data identifying the base station 17 through which it is receiving service (and possibly the serving sector). In some implementations, the PDE may receive data regarding several base stations/sectors and signal strengths thereof, for trilateration. The PDE 23. uses information about base station location(s) to process the data received from the mobile station so as to determine a region (e.g., area of the cell or sector, or a general area triangulated based on signals from several base stations) that the mobile station is likely located within. The PDE 23 then uses the pre-fix location to parse the satellite data down, to assistance data that the mobile station at the particular location needs in order to take GPS readings. The PDE 23. sends the parsed satellite data to the mobile station, e.g., to target mobile station 131, for use in taking measurements of signals from appropriate satellites 25. The GPS assistance data may contain selected satellite almanac, satellite visibility, Doppler and clock correction information.

The mobile station, in turn, uses this information (also known as acquisition assistance records) to take multiple satellite pseudorange measurements. Depending on the device/network configuration, the mobile station such as 131 or the PDE 23 can then calculate a final fix using these pseudorange measurements. The final fix computation provides latitude and longitude (and possibly altitude) coordinates for the current location of the mobile station 131. If the mobile station 131 has full GPS computation capability, the station 131 would know its current latitude and longitude and would communicate that data to the PDE 23 through the network 15. In many cases, however, the mobile station has only measurement capability, and the mobile station forwards the measurement data to the PDE 23 to determine the final fix. In either case, the GPS processing leads to a situation in which the PDE 23 knows the latitude and longitude of the mobile station, that is to say 131 in our example. If necessary, the PDE 23 can provide coordinates to the mobile station 131.

For many location based applications today, further processing or access is needed. To provide access to general users, e.g., mobile subscribers and authorized third party users, the carrier also operates a location proxy server (LPS) 21. The LPS 21 is essentially a general purpose programmable device with an interface for data communication via the network 15 running server software and running programming for implementation of the LPS functionality. In the example, the server platform runs a queue manager for managing communications and access to the various LPS program modules. The LPS program modules include a thin API proxy client, for client-server proxy communications with the mobile stations, such as the target mobile station 131. The LPS program modules also include a PDE adapter, for communications through the network with the PDE 23, e.g., for situations in which the LPS 21 needs to obtain mobile station position data from the PDE 23.

For purposes of the present discussion, the LPS program modules also include a user privacy component (UPc) and a Geographic Information System (GIS) component module. The UPc module uses the MS-MPC protocol to communicate through the network with the mobile stations. The UPc module manages and enforces subscriber permissions with regard to access to a user's location data, and this module authenticates all applications before allowing location fixes with regard to a mobile station location. For example, during a location operation regarding the mobile station 131, this module authenticates the device software for access to the location information regarding that mobile station 131.

The GIS component module provides various location specific information, such as mapping data (maps, roads, points of interest, etc.) and associated coding functions. For the exemplary location function, the GIS component may provide a translation from the geographic coordinates for the location of the target mobile station 131 into an address, typically a street address, for that location.

In general, a party or system that needs or desires location information with regard to a mobile station contacts the LPS 21. The LPS authenticates that party and application and provides location related information. For the present location function, the mobile station 131 initially contacts the LPS 21, which authenticates client software in that device. The LPS 21 then directs the mobile station to the PDE 23 for a position fix of the type outlined above in the discussion of the aGPS example. Upon determining the final fix, the LPS 21 converts location coordinates received from the PDE 23 to address text data for the mobile station 131 and sends that data through the network 15 for that station to use in the SMS response message communication back to the requestor at station 132 via the network 15.

Having discussed the elements of the exemplary system 10 and their respective general functions, it may be helpful now to go through the operations involved in providing location information, in this case from one mobile station to another, upon request. For that purpose, FIG. 1 also provides a high level flow diagram illustrating steps of a procedure for obtaining the mobile station location information.

At a high level, the user desires to learn the location of the target mobile station, that is to say the mobile station 131 in our example. The station 131 may belong to or be associated with the particular user. For example, the user may have lost the station 131, or the user may be a parent of a child who normally has/carries the particular mobile station 131. The user knows the activation code, which is common to any number of mobile stations that support the location functionality, in our example. In the drawing, the activation code would be "findlocation," although in practice any other combination of letters and/or numbers could be used. In view of the user's relationship to the target mobile station 131, the user also knows the appropriate user password for that station. To obtain the desired location information, the user as requestor operates another (requesting) mobile station 132 to initiate a text message addressed to the MDN of the target mobile station 131.

The user inputs the predetermined code (combination of the activation code and the password - or "findlocationpassword" in the example) for inclusion in the body of the SMS type location request message. As such, the predetermined code is included as user data, as opposed to parameter data say in a header or trailer of the request message. The mobile station 132 sends the message as an SMS message through the network 15, essentially as the user's request to obtain location information regarding the mobile station 131 (at S1).

The network relays the message to the SMSC 19, which temporarily stores the message and signals the addressed mobile station 131. The mobile station interacts with the SMSC 19, to retrieve/receive the message through the network 15. Aspects of the SMS communication through the network 15 are standard, and a more detailed description of such operations is omitted here as those skilled in the art should be quite familiar with the techniques for SMS message communications through a wireless mobile communication network between two mobile stations.

The mobile station 132 recognizes the activation code in the request message as an indication that the message is not a regular text message for alert and display purposes but instead is a message for triggering an action by the mobile station (see S2 - incoming message in this case does not generate an alert or otherwise appear as a received user message on the mobile station 131). In this case, the activation code initially causes the mobile station 131 to check for the presence of the appropriate user password in the message. If the password in the received message matches a user password set/stored in the mobile station 131, then the mobile station initiates the operation(s) to find its location (see S3). In the example of FIG. 1, the mobile station 131 uses an aGPS procedure and interactions with the LPS 21 and the PDE 23 as discussed above to determine location and obtain textual information regarding that location.

At a high level, the location based software in the station 131 is authenticated through the LPS 21 after which it obtains GPS assistance data from the PDE 23. The mobile station 13 takes measurements of signals from one or more of the satellites 25, and the PDE 23 and/or the mobile station 13 process the measurement data to determine the position coordinates (latitude, longitude and possibly altitude) of the current location of the mobile station 13. The position coordinates data is sent to the LPS 21, which converts the coordinates to an address for that geographic location, typically a street address. The LPS 21 sends the address back to the mobile station 131.

At step S4, the target mobile station generates and sends a responsive SMS message. The message uses the MDN of the station 132 obtained from the received message as a destination address for the response message. The mobile station 131 inserts the information as to its location, e.g., street address in our simplest example, obtained in step S3, and transmits the message over the air to the network 15. The network relays the message to the SMSC 19, which temporarily stores the message and signals the addressed mobile station 132. The mobile station 132 interacts with the SMSC 19, to retrieve/receive the response message through the network 17. Aspects of the SMS communication through the network 15 are standard, and a more detailed description of such operations are omitted here as those skilled in the art should be quite familiar with the techniques for SMS message communications through a wireless mobile communication network between two mobile stations.

Upon receipt of the response message, the mobile station 132 provides an alert and allows the user to operate that station so as to display the SMS response message. In this way, the requesting mobile station 132 will display the location information from the mobile station 131, in this example, the street address for the current location of the target mobile station 131.

In the example, the information regarding the mobile station location was textual information indicating a street address corresponding to the latitude and longitude of the current location of the mobile station. Of course other appropriate information could be used, such as the name of an establishment at that location, cross-streets of an intersection, etc. If MMS messaging were used, the information might include image or other graphical information, such as a map.

As shown by the above discussion, much of the processing for providing location information is implemented in one or more mobile stations, particularly in the target mobile station 131. Those skilled in the art presumably are familiar with the structure, programming and operations of such stations. However, for completeness, it may be useful to consider the functional elements/aspects of an exemplary mobile station, at a high-level.

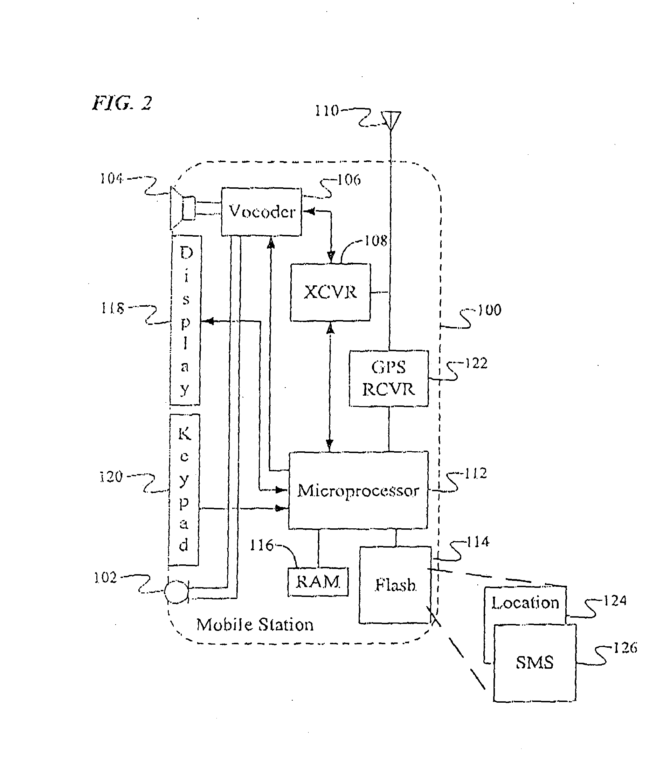

For purposes of such a discussion, FIG. 2 provides a block diagram illustration of an exemplary wireless device 100, which may be either of the wireless devices 131 and 132. Although the wireless device 100 may be a smart-phone or may be incorporated into another device, such as a personal digital assistant (PDA) or the like, for discussion purposes, the illustration shows the wireless device 100 in the form of a handset. The handset embodiment of the wireless device 100 functions as a normal digital wireless telephone station. For that function, the station 100 includes a microphone 102 for audio signal input and a speaker 104 for audio signal output. The microphone 102 and speaker 104 connect to voice coding and decoding circuitry (vocoder) 106. For a voice telephone call, for example, the vocoder 106 provides two-way conversion between analog audio signals representing speech or other audio and digital samples at a compressed bit rate compatible with the digital protocol of wireless telephone network communications or voice over packet (Internet Protocol) communications.

For digital wireless communications, the handset 100 also includes at least one digital transceiver (XCVR) 108. Today, the handset 100 would be configured for digital wireless communications using one or more of the common network technology types. For example, the handset 100 may be a dual mode device capable of utilizing either or both of CDMA (IS-95, 1XRTT or EV-DO) technologies and 3GPP (LTE/GSM/UMTS) technologies. For that purpose, the transceiver (XCVR) 108 could be a multimode transceiver, or the handset 100 may include two or more transceivers each of which supports a subset of the various technologies or modes. The concepts discussed here encompass embodiments of the station 100 utilizing any digital transceivers that conform to current or future developed digital wireless communication standards. The mobile station 100 may also be capable of analog operation via a legacy network technology.

The transceiver 108 provides two-way wireless communication of information, such as vocoded speech samples and/or digital message information, in accordance with the technology of the network 15. The transceiver 108 also sends and receives a variety of signaling messages in support of the various voice and data services provided via the station 100 and the communication network. Each transceiver 108 connects through RF send and receive amplifiers (not separately shown) to an antenna 110. In the example, the transceiver 108 is configured for RF communication in accord with a digital wireless protocol, such as the current CDMA and 3GPP protocols. Of note for purposes of this discussion, the transceiver also supports mobile messaging service message communications to and from the handset 100. In the example, the transceiver supports at least SMS type messaging although it may also support other mobile messaging such as EMS and/or MMS.

The station 100 includes a display 118 for displaying messages, menus or the like, call related information dialed by the user, calling party numbers, etc. A keypad 120 enables dialing digits for voice and/or data calls as well as generating selection inputs, for example, as may be keyed-in by the user based on a displayed menu or as a cursor control and selection of a highlighted item on a displayed screen. The display 118 and keypad 120 are the physical elements providing a textual or graphical user interface. Various combinations of the keypad 120, display 118, microphone 102 and speaker 104 may be used as the physical input output elements of the graphical user interface (GUI), for multimedia (e.g., audio and/or video) communications. Of course other user interface elements may be used, such as a stylus and touch sensitive display screen, as in a PDA or smart phone.

In addition to normal telephone and data communication related input/output (including message input and message display functions), the user interface elements also may be used for display of menus and other information to the user and user input of selections, including any needed during a device location operation. For example, if used as the requesting mobile station 132, the keypad would be used to input the MDN of the target station 131 as well as the requisite code (activation code and password) and then initiate transmission. Then, based on the response from the mobile station 131, the device .100 would display the current location information on display 118.

A microprocessor 112 serves as a programmable controller for the wireless device 100, in that it controls all operations of the wireless device 100 in accord with programming that it executes, for all normal operations, and for operations involved in the device location procedure under consideration here. In the example, the wireless device 100 includes flash type program memory 114, for storage of various "software" or "firmware" program routines and mobile configuration settings, such as mobile directory number (MDN) and/or mobile identification number (MIN), etc. The wireless device 100 may also include a non-volatile random access memory (RAM) 116 for a working data processing memory. Of course, other storage devices or configurations may be added to or substituted for those in the example. In a present implementation, the flash type program memory 114 stores firmware such as a boot routine, device driver software, an operating system, call processing software and vocoder control software, and any of a wide variety of other applications, such as client browser software and short message service software. The memories 114, 116 also store various data, such as telephone numbers and server addresses, downloaded data such as multimedia content, and various data input by the user. Programming stored in the flash type program memory 114, sometimes referred to as "firmware," is loaded into and executed by the microprocessor 112.

For position determination and associated location based functions, the mobile station 100 also includes a GPS receiver 122. Under control of the microprocessor 112, the GPS receiver 122 receives and processes signals from one or more satellites 25 of the GPS constellation. From its processing, the GPS receiver 122 supplies GPS data to the microprocessor 112, such as pseudorange measurements and associated PN codes for measured satellite signals. Associated computations may be performed in the microprocessor or by a processor or the like included in the GPS receiver.

If the receiver 122 or the combination of the receiver and the microprocessor 112 are configured to provide a fully functional GPS position determination device, the station 100 could process the pseudorange measurements, absolute times of transmission of the GPS signals, and satellite position data to compute at least the station's latitude and longitude and possibly translate that data into location information such as street address. However, because of size/space/cost constraints on the design of the mobile stations, the GPS receiver 122 in the mobile station 100 often will have only reception capability, not the full GPS processing capability to resolve position from signals received from the satellites 25. Hence, the receiver 122 supplies the GPS measurement and code data to the microprocessor 112, which in turn formats the data and sends it to the PDE 23 using the wireless transceiver 108. As outlined above, the PDE 23 performs the data processing necessary to determine the latitude and longitude of the station 100 and transmits that data where needed, which in our example, may be used by the LPS 21 to provide the street address or the like back to the mobile station 100 for inclusion in the location response message sent at S4.

As outlined above, the mobile station 100 includes a processor, and programming stored in the flash memory 114 configures the processor so that the mobile station is capable of performing various desired functions, including in this case the functions involved in the technique for providing location information.

In the example, the executable programming stored in the flash memory 114 includes at least some minimal location determination software 124. The location determination software 124 in our example controls the checking of the user password; and that programming controls the operation of the GPS receiver 122, the processing of the GPS measurements and the interactions through the network with LPS 21 and PDE 23 to determine location and obtain the address data essentially as discussed above. The executable programming also includes SMS message communication programming 126, for recognizing the activation code to start the program 124 and to receive/send the various SMS messages. Hence, the executable programming 124, 126 configures the microprocessor so that the mobile station 100 is capable of providing the location information, as did the target mobile station 131 1 in the example of FIG. 1. Programming similar to the SMS programming 126 also is used in the requesting mobile station 132, in the sending and receiving of the SMS messages shown at S 1 and S4 in the call flow portion of FIG. 1.

The structure and operation of the mobile station 100, as outlined above, were described to by way of example, only.

As shown by the above discussion, functions relating to the automated locating of a mobile station without an alert at the mobile station may be implemented on programmable mobile stations configured for wireless communication via a mobile communication network, operating as an one of the mobile stations as shown by way of example in FIGS. 1 and 2.

The software functionalities involve programming, including executable code as well as associated stored data, e.g., files used for the code recognition. The programming code is executable by the processor (microprocessor or the like) that functions as the control element of the particular mobile station device. In operation, the code is stored within the memory of the mobile station for loading and execution by the processor. At other times, however, the executable code may be stored at other locations and/or transported for loading into the mobile station. Execution of such code by the processor of the mobile station enables the mobile station to implement the methodology for providing location information, in essentially the manner performed in the examples discussed and illustrated herein.

Hence, aspects of the methods of providing location information outlined above may be embodied in programming. Program aspects of the technology may be thought of as "products" or "articles of manufacture" typically in the form of executable code and/or associated data that is carried on or embodied in a type of machine readable medium. "Storage" type media include any or all of the non-transitory, tangible memory of the computers, processors, mobile stations or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from a computer or processor into the mobile station to add or update the functionality to that device. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, "storage" media relates to tangible, non-transitory media for storing programming and/or data, and unless restricted to such "storage" media, terms such as computer or machine "readable medium" refer to any medium that participates in providing instructions to a processor for execution.

Such a machine readable medium may take many forms, including but not limited to, a tangible storage medium, a carrier wave medium or physical transmission medium. Non-volatile storage media include, for example, optical or magnetic disks, such as any of the storage devices in the mobile stations illustrated in the drawings. Volatile storage media include dynamic memory, such as main memory of such a computer platform. Tangible transmission media include coaxial cables; copper wire and fiber optics, including the wires that comprise a bus within a computer system. Carrier-wave transmission media can take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a ROM, a PROM and EPROM, a Flash-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

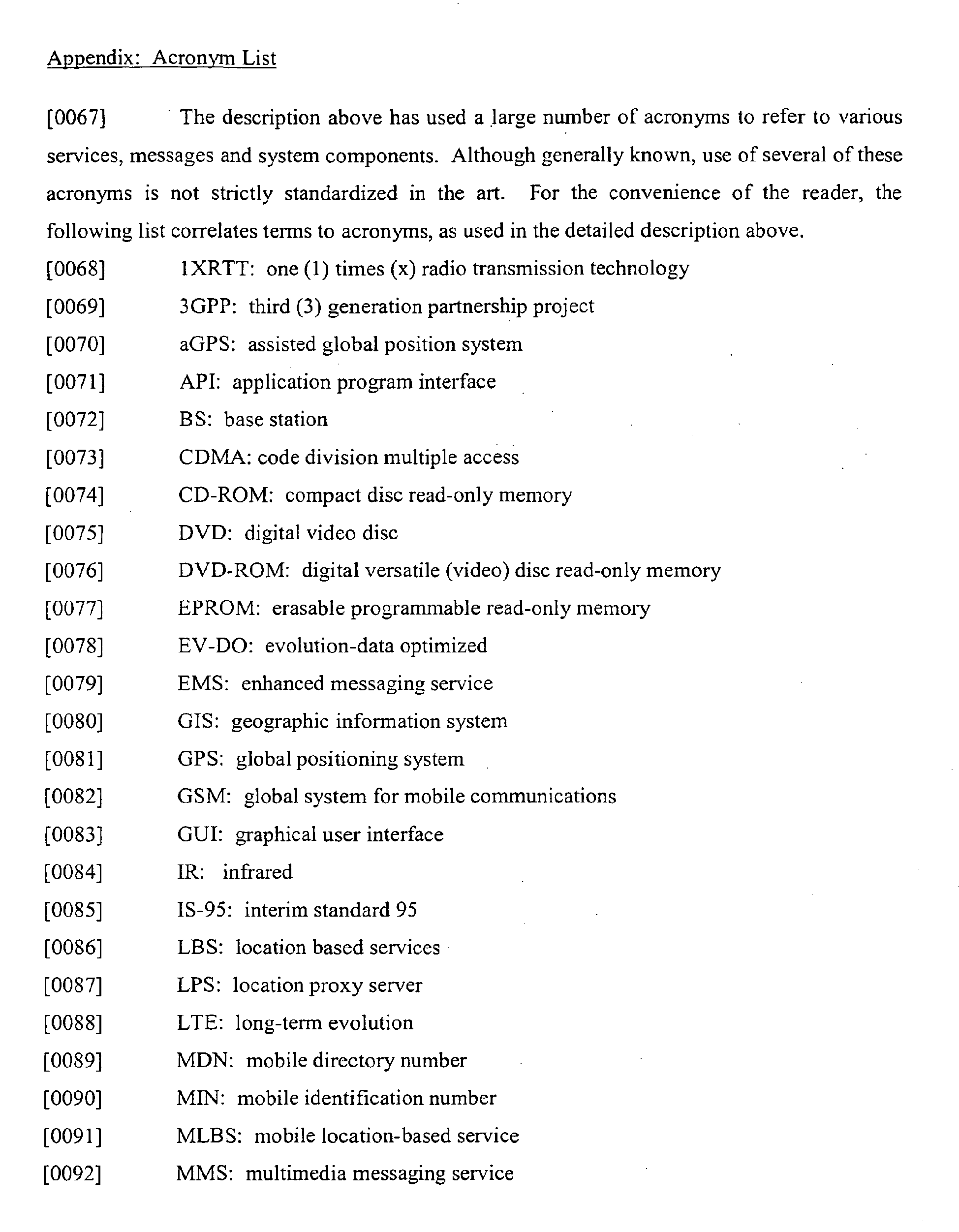

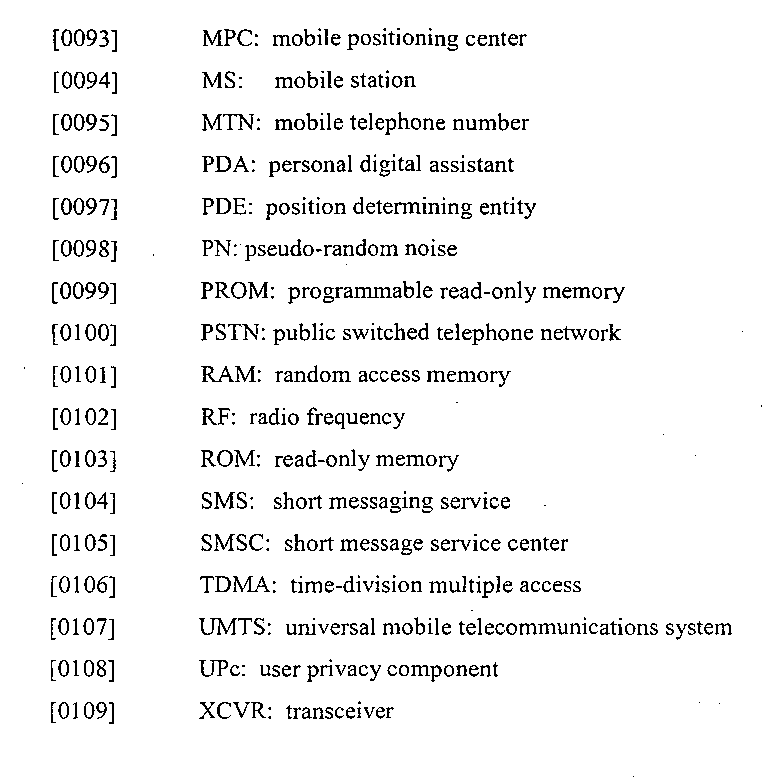

## Claims

1. A method of providing information as to location of a mobile station, the method comprising steps of:
receiving a mobile messaging service message from a requestor, over the air from a wireless mobile communication network, at the mobile station; and
upon detecting a predetermined code contained in the received message, without displaying the received message at the mobile station and without generating any alert regarding the received message at the mobile station:
(a) determining the location of the mobile station;
(b) producing the information as to location of the mobile station, based on the determined location; and
(c) sending a mobile messaging service message from the mobile station over the air and through the wireless mobile communication network, for the requestor, the sent message containing the information as to location of the mobile station.

2. The method of claim 1, wherein:
the received message is from and identifies another mobile station; and
the sent message is addressed for delivery to the other mobile station.

3. The method of claim 2, wherein:
the received message is a short messaging service (SMS) type message from the other mobile station; and
the sent message is a SMS type message having a number of the other mobile station as a destination address.

4. The method of any one of the preceding claims, wherein the predetermined code comprises:
a location determination activation code, for instructing the mobile station to perform steps (a) to (c) without displaying the received message at the mobile station and without generating any alert regarding the received message at the mobile station; and
a user password of a person authorized to be the requestor.

5. The method of any one of the preceding claims, wherein the mobile station implements the step (a) of determining the location of the mobile station by a technique from the group consisting of:
(I) standalone global positioning satellite (GPS) location determination;
(II) assisted GPS location determination; and
(III) triangulation using a signal from any one or more receivable base stations.

6. The method of any one of the preceding claims, wherein the generated information as to location of the mobile station contained in the sent message comprises text for a street address of the location of the mobile station.

7. A mobile station, comprising:
a transceiver for over the air communication through a wireless mobile communication network; and
a processor coupled to the transceiver configured so that the mobile station is capable of performing functions comprising:
receiving a mobile messaging service message from a requestor, over the air from the wireless mobile communication network, at the mobile station; and
upon detecting a predetermined code contained in the received message, without displaying the received message at the mobile station and without generating any alert regarding the received message at the mobile station:
(a) determining the location of the mobile station;
(b) producing the information as to location of the mobile station, based on the determined location; and
(c) sending a mobile messaging service message from the mobile station over the air and through the wireless mobile communication network, for the requestor, the sent message containing the information as to location of the mobile station.

8. The mobile station of claim 7, further comprising:
a global positioning satellite (GPS) receiver,
wherein the processor is configured for processing signals from the GPS receiver to implement the function of determining the location of the mobile station
wherein the processor is exemplarily configured so that the mobile station is capable of determining the location of the mobile station by the processing signals from the GPS receiver to implement:
(I) a standalone global positioning satellite (GPS) location determination; or
(II) an assisted GPS location determination.

9. The mobile station of claim 7 or 8, wherein the processor is configured so that the mobile station is capable of determining the location of the mobile station by a triangulation using a signal from any one or more receivable base stations.

10. The mobile station of any one of claims 7 to 9,
wherein the processor is configured to provide text for a street address of the location of the mobile station as the information as to location of the mobile station contained in the sent message
and/orwherein the processor is configured to recognize a combination of a location determination activation code and a user password of a person authorized to be the requestor as the predetermined code.

11. The mobile station of any one of claims 7 to 10,
wherein the processor is configured to:
identify another mobile station as originator of the received message; and
address the sent message for delivery to the other mobile station,
wherein the processor is exemplarily configured to:
process a short messaging service (SMS) type message from the other mobile station as the received message; and
generate the sent message as a SMS type message having a number of the other mobile station as a destination address.

12. The mobile station of any one of claims 7 to 11, further comprising:
a memory accessible by the processor; and
programming stored in the memory, wherein execution of at least some of the programming by the processor configures the processor so that the mobile station is capable of performing said functions.

13. An article of manufacture, comprising:
a machine readable storage medium; and
instructions stored in said medium for execution by a processor of a mobile station to configure the processor to control the mobile station so as to be capable of performing functions comprising:
receiving a mobile messaging service message from a requestor, over the air from the wireless mobile communication network, at the mobile station; and
upon detecting a predetermined code contained in the received message, without displaying the received message at the mobile station and without generating any alert regarding the received message at the mobile station:
(a) determining the location of the mobile station;
(b) producing the information as to location of the mobile station, based on the determined location; and
(c) sending a mobile messaging service message from the mobile station over the air and through the wireless mobile communication network, for the requestor, the sent message containing the information as to location of the mobile station.

14. A method of providing information as to location of a target mobile station for another mobile station, the method comprising steps of:
receiving a mobile messaging service message from the other mobile station, over the air from a wireless mobile communication network, at the target mobile station;
detecting a location activation code and a valid password for a user associated with the target mobile station, contained in the received message;
in response to the detecting of the code and valid password in the received message, without displaying the received message at the target mobile station and without generating any alert regarding the received message at the target mobile station:
(a) determining the location of the target mobile station;
(b) producing the information as to location of the target mobile station, based on the determined location; and
(c) sending a mobile messaging service message from the target mobile station over the air and through the wireless mobile communication network, addressed to the other mobile station, the sent message containing the information as to location of the target mobile station.

15. The target mobile station configured to be capable of performing the steps of claim 14.

16. An article comprising programming for configuring the target mobile station configured to be capable of performing the steps of claim 14, and a machine readable storage medium bearing the instructions.
